# FASCICULE DE BREVET EUROPEEN

(11) **EP 0 953 423 B1**
(45) Date de publication et mention de la délivrance du brevet: **04.06.2003**
(21) Numéro de dépôt: 99401050.2
(22) Date de dépôt: 29.04.1999
(51) Int. Cl.: B29C 45/14, B29C 45/16

(54) **Procédé pour réaliser une pièce en matière plastique partiellement revêtue d'un film, notamment décoratif**
Verfahren zur Herstellung eines Kunststoffteils teilweise beschichtet mit einem Film, insbesondere Dekorfilm
Method for producing a plastic part partially coated with a film, in particular decorative film

(30) Priorité: 30.04.1998 FR 9805498
(43) Date de publication de la demande: 03.11.1999
(73) Titulaire: COMPAGNIE PLASTIC OMNIUM, 69007 Lyon (FR)
(72) Inventeur: Gille, Denis, 01100 Bellignat (FR); Barrault, Thierry, 01100 Geovreisset (FR)
(74) Mandataire: Leszczynski, André

(56) Documents cités:
- EP-A- 0 502 672
- EP-A- 0 615 827
- EP-A- 0 676 267
- GB-A- 869 416
- PATENT ABSTRACTS OF JAPAN vol. 14, no. 311 (M-994), 4 juillet 1990 (1990-07-04) -& JP 02 102010 A (JAPAN STEEL WORKS LTD:THE), 13 avril 1990 (1990-04-13)

## Description

La présente invention concerne un procédé pour réaliser une pièce en matière plastique partiellement ou entièrement revêtue d'au moins deux films, notamment de films décoratifs en matière plastique.

Il est connu de réaliser des pièces en matière plastique comportant une face entièrement revêtue d'un film décoratif, comme par exemple des pièces de carrosserie de véhicules automobiles dont la face extérieure est revêtue d'un film en PVDF (fluorure de polyvinylidène) qui présente l'aspect d'une peinture, ce qui évite d'avoir à passer les pièces ainsi réalisées en peinture.

Un procédé connu de fabrication d'une telle pièce consiste à préformer le film décoratif pour lui donner la forme de la surface de la pièce qu'il est destiné à recouvrir, à placer le film préformé contre l'empreinte d'un moule dont la cavité délimite la pièce à réaliser et à introduire une quantité de matière plastique à l'état fondu dans la cavité du moule pour surmouler le film décoratif.

Un tel procédé n'est mis en oeuvre à ce jour que pour réaliser des pièces de carrosserie dont la face extérieure en son entier est revêtue du film décoratif, en raison du fait que l'introduction de matière thermoplastique à l'état fondu dans le moule a tendance à décoller ou à déplacer le film préformé qui est positionné contre l'empreinte du moule avant l'introduction de la matière plastique fondue.

En prévoyant un film sur toute la face extérieure de la pièce, on évite ces problèmes car le film positionné dans le moule s'étend sur toute la surface suivant laquelle la matière plastique flue dans le moule.

En revanche, pour les pièces de carrosserie dont la surface extérieure ne doit pas être complètement peinte, comme par exemple des boucliers de pare-chocs ou des bas de caisses, des calandres ou encore des panneaux de portière munis d'un bourrelet protecteur non peint, ainsi que pour les pièces de carrosserie qui doivent présenter deux coloris différents sur leur surface, on continue à recourir à la peinture traditionnelle, ce qui exige un important travail préparatoire de marouflage consistant à masquer les parties de la pièce qui ne doivent pas être peintes.

On comprend qu'une telle préparation accroît notablement le prix de revient des pièces.

En outre, tout autour de la ou des zones peintes, il faut prévoir une ligne de style pour dissimuler les irrégularités du bord de la zone peinte.

Or, dans certains cas, l'esthétique de la pièce serait plus réussie si l'on pouvait éliminer une telle ligne de style.

On connaît par la demande de brevet EP 0 502 672 un procédé de fabrication d'un ensemble d'éclairage d'un véhicule automobile.

Dans ce procédé, on dispose dans une cavité de moule deux films, puis l'on injecte de la matière plastique dans cette cavité.

La présente invention vise à fournir un nouveau procédé qui permet d'obtenir des pièces en matière plastique dont la surface est revêtue d'au moins deux films, notamment décoratifs, ce procédé permettant notamment d'obtenir des pièces de carrosserie aptes à remplacer les pièces de carrosserie partiellement peintes et/ou peintes d'au moins deux couleurs de l'état de la technique.

La présente invention a pour objet un procédé pour réaliser une pièce en matière plastique revêtue d'au moins deux films, notamment décoratifs, sur deux zones limitées d'une de ses faces, qui consiste à mettre en oeuvre les étapes suivantes :
- préformage des films pour leur donner chacun la forme de la face de la pièce, sur une superficie au moins égale à celle de la zone correspondante à revêtir,
- découpage des films aux dimensions exactes de la zone à revêtir,
- positionnement des films préformés et découpés contre l'empreinte d'un moule de manière qu'ils ne se chevauchent pas,
- introduction d'une première quantité de matière plastique à l'état fondu dans la cavité du moule, au dos de chacun des films, l'introduction de la matière plastique dans la cavité du moule étant contrôlée de manière, d'une part, que le front de matière plastique fluant dans la cavité du moule pour le remplir progresse dans le moule en étirant chaque film de manière centrifuge, de telle sorte que le film ne soit ni déplacé ni plissé, et, d'autre part, que les fronts de matière plastique présente derrière chaque film se rejoignent soit en des endroits du moule dépourvus de film, soit au droit des bords en regard des deux films le cas échéant, jusqu'à ce que toute la surface de chaque film soit recouverte d'une couche de matière plastique, puis,
- introduction éventuelle d'une quantité complémentaire de matière plastique dans la cavité du moule jusqu'à remplissage de cette dernière.

Le procédé selon l'invention tire son originalité du fait que, contrairement à toute attente, si l'on prend les précautions indiquées ci-dessus, on peut surmouler deux films, notamment des films décoratifs, et obtenir ainsi une pièce dont la face à revêtir présente deux coloris, sans altération des bords des films.

Ainsi, la pièce obtenue selon le procédé de l'invention comporte une délimitation très nette entre ses zones revêtues d'une part, si celles-ci sont juxtaposées bord à bord, et entre chaque zone revêtue et le reste de la surface de la pièce, d'autre part.

Il en résulte un avantage important du procédé selon l'invention, consistant en ce que la délimitation très nette des zones revêtues de la pièce en matière plastique peut être rendue visible et participer à l'esthétique d'ensemble de la pièce, sans qu'aucune ligne de style ne s'impose autour des zones revêtues.

Le procédé selon l'invention peut être mis en oeuvre pour réaliser non seulement des pièces de carrosserie de véhicule automobile, mais également des pièces intérieures destinées à l'habitacle d'un véhicule automobile et toute autre pièce en matière plastique colorée de deux couleurs différentes.

Dans le but de mieux faire comprendre l'invention, on va en décrire maintenant un mode de réalisation donné à titre d'exemple non limitatif en référence au dessin annexé dans lequel :
- la figure 1 est une vue de face d'une portion de calandre revêtue de trois films décoratifs,
- la figure 2 est une vue en coupe selon II-II par rapport à la figure 1 d'un moule permettant la réalisation de la portion de calandre de la figure 1,
- la figure 3 est une vue analogue à la figure 2 à une étape ultérieure d'injection de la matière plastique,
- la figure 4 est une vue analogue à la figure 3 à une étape ultérieure d'injection de la matière plastique.

Sur les figures, on a représenté une portion de calandre 10 comportant trois revêtements 11, 12, 13, juxtaposés sur la totalité de sa surface, deux 11, 12 de ces revêtements étant identiques.

Pour réaliser une telle portion de calandre, on préforme un premier et un second films décoratifs à la forme générale de la portion de calandre à réaliser.

Une fois cette opération effectuée, on superpose les deux films préformés et on les découpe simultanément au niveau des frontières entre les motifs de la pièce à réaliser, ce qui garantit une juxtaposition optimale des bords voisins des morceaux de films ainsi obtenus.

On dispose ensuite dans un moule 14 les deux morceaux latéraux 11 et 12 du premier film et le morceau central 13 du second film, ces trois morceaux étant précisément juxtaposés les uns aux autres.

Les bords en regard des films contigus forment des frontières 16.

L'injection de matière plastique 18 dans le moule commence par le canal central 15 où la matière plastique fluant dans le moule exerce sur le morceau de film central 13 une force centrifuge qui le maintient en position et ne provoque ni plissage ni déchirure de ce dernier.

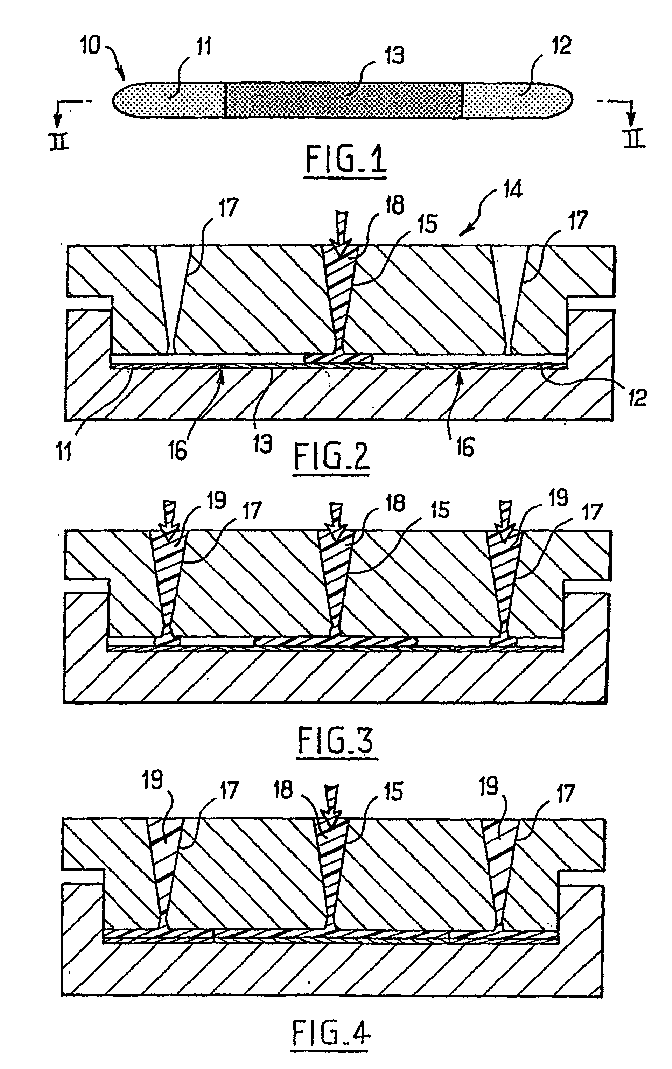

Une fois que la matière plastique 18 a progressé dans le moule jusqu'à se trouver à une distance des frontières 16 sensiblement égale à la distance entre les canaux d'injection latéraux 17 et lesdites frontières 16, comme représenté à la figure 2, on commence l'injection de matière plastique 19 dans les canaux latéraux 17, en contrôlant également le fluage de la matière plastique de telle sorte que cette dernière exerce des forces centrifuges sur les morceaux de film latéraux 11 et 12, sans les plisser ni les déchirer, comme illustré par la figure 3.

L'injection de matière plastique dans les canaux centraux 15 et latéraux 17 se prolonge jusqu'à ce que les fronts de matière se rejoignent au droit des frontières 16 entre les trois morceaux de films décoratifs, comme on le voit figure 4.

On obtient ainsi la portion de calandre de la figure 1, dans laquelle les films sont précisément juxtaposés les uns à coté des autres.

On voit que le procédé selon l'invention permet de réaliser des revêtements multiples de pièces en matière plastique moyennant certaines précautions d'injection, sans que la frontière des parties revêtues de la pièce n'ait besoin d'être dissimulée.

Il est bien entendu que les modes de réalisation qui viennent d'être décrits ne présentent aucun caractère limitatif et qu'ils pourront recevoir toutes modifications désirables sans sortir pour cela du cadre de l'invention tel que défini par les revendications.

## Revendications

1. Procédé pour réaliser une pièce en matière plastique revêtue d'au moins deux films (11, 12, 13), notamment décoratifs, sur deux zones limitées d'une de ses faces, qui consiste à mettre en oeuvre les étapes suivantes :
- préformage des films (11, 12, 13) pour lui donner la forme de la face de la pièce, sur une superficie au moins égale à celle de la zone à revêtir,
- découpage de chaque film aux dimensions exactes de la zone correspondantes à revêtir,
- positionnement des films préformés et découpés contre l'empreinte d'un moule (14),
- introduction d'une première quantité de matière plastique à l'état fondu (18, 19) dans la cavité du moule, au dos de chacun des films (11, 12, 13), l'introduction de la matière plastique dans la cavité du moule étant contrôlée de manière, d'une part, que le front de matière plastique fluant dans la cavité du moule pour le remplir progresse dans le moule en étirant chaque film (11, 12, 13) de manière centrifuge, de telle sorte que le film ne soit ni déplacé ni plissé, et, d'autre part, que les fronts de matière plastique présente derrière chaque film se rejoignent soit en des endroits du moule dépourvus de film, soit au droit des bords en regard (16) des deux films le cas échéant, jusqu'à ce que toute la surface du film soit recouverte d'une couche de matière plastique, puis,
- introduction éventuelle d'une quantité complémentaire de matière plastique dans la cavité du moule jusqu'à remplissage de cette dernière.

2. Procédé selon la revendication 1, **caractérisé par le fait que** pour découper les films préformés, on les superpose et on les découpe simultanément.

3. Procédé selon l'une des revendications 1 et 2, **caractérisé par le fait que** la pièce en matière plastique présente deux couleurs.

4. Procédé selon l'une quelconque des revendications précédentes, **caractérisé par le fait que** l'on positionne les films dans le moule en les juxtaposant bord à bord.

5. Procédé selon l'une quelconque des revendications précédentes, **caractérisé par le fait que** la pièce en matière plastique est une pièce de carrosserie d'un véhicule automobile ou une pièce intérieure destinée à l'habitacle d'un véhicule automobile.

6. Procédé selon la revendication 5, **caractérisé par le fait que** la pièce est une portion de calandre d'un véhicule automobile.

## Claims

1. Method for producing a plastic part coated with at least two films (11, 12, 13), particularly decorative films, on two limited regions of one of its faces, which consists in employing the following steps:
- preforming the films (11, 12, 13) to give it the shape of the face of the part, over an area at least equal to that of the region that is to be coated,
- cutting each film to the precise dimensions of the corresponding region that is to be coated,
- positioning the preformed and cut films against the impression of a mould (14),
- introducing a first amount of plastic in the molten state (18, 19) into the mould cavity, on the back of each of the films (11, 12, 13), the introduction of the plastic into the mould cavity being controlled in such a way that, on the one hand, the front of plastic flowing into the mould cavity in order to fill it progresses in the mould, stretching out each film (11, 12, 13) centrifugally, so that the film is neither shifted nor wrinkled, and, on the other hand, that the fronts of plastic present behind each film meet either at points in the mould where there is no film or at the facing edges (16) of the two films, as appropriate, until the entire surface of the film is covered with a layer of plastic, then,
- possibly introducing an additional amount of plastic into the mould cavity until the latter is filled.

2. Method according to Claim 1, **characterized in that**, in order to cut the preformed films, these are superposed and cut simultaneously.

3. Method according to either of Claims 1 and 2, **characterized in that** the plastic part is in two colours.

4. Method according to any one of the preceding claims, **characterized in that** the films are positioned in the mould, juxtaposing them edge to edge.

5. Method according to any one of the preceding claims, **characterized in that** the plastic part is a motor vehicle bodywork part or an interior part intended for the cabin of a motor vehicle.

6. Method according to Claim 5, **characterized in that** the part is a portion of a motor vehicle radiator grille.

## Patentansprüche

1. Verfahren zur Herstellung eines Kunststoffteils, das mit mindestens zwei Filmen (11, 12, 13), insbesondere Dekofilmen, auf zwei begrenzten Bereichen einer seiner Flächen abgedeckt ist, das Verfahren weist die Durchführung der folgenden Verfahrensschritte auf:
- Vorformen der Filme (11, 12, 13), um diesen die Form der Fläche des Kunststoffteils zu geben, über einer Oberfläche, die dem abzudeckenden Bereich zumindest gleich ist,
- Zuschneiden jedes Films auf die exakten entsprechenden Dimensionen des abzudeckenden Bereichs,
- Positionieren der vorgeformten und zugeschnittenen Filme am Hohlraum einer Form (14),
- Eingabe einer ersten Menge an Kunststoffmaterial (18, 19) im schmelzflüssigen Zustand in den Hohlraum der Form und auf den Rücken jedes der Filme (11, 12, 13), diese Eingabe des Kunststoffmaterials in den Hohlraum der Form wird derart gesteuert durchgeführt, dass einerseits die Front des Kunststoffmaterials, die in dem Hohlraum der Form fließt, um diese auszufüllen, so in der Form voranschreitet, dass jeder Film (11, 12, 13) in zentrifugaler Weise gereckt wird, dergestalt, dass der Film weder verschoben wird noch sich faltet, und dass andererseits die Fronten des Kunststoffmaterials, das sich hinter jedem Film befindet, sich entweder in Gebieten der Form vereinigen, in denen sich kein Film befindet, oder je nach Fall direkt oberhalb der einander gegenüberliegenden Ränder (16) zweier Filme vereinigen, bis die gesamte Oberfläche des Films mit einer Schicht aus Kunststoffmaterial bedeckt ist, danach
- ggf. Eingabe einer ergänzenden Menge an Kunststoffmaterial in den Hohlraum der Form bis zur Füllung des Hohlraums.

2. Verfahren nach Anspruch 1, **dadurch gekennzeichnet, dass** man für das Zuschneiden der vorgeformten Filme diese übereinander legt und sie simultan zuschneidet.

3. Verfahren nach einem der Ansprüche 1 und 2, **dadurch gekennzeichnet, dass** das Kunststoffteil zwei Farben aufweist.

4. Verfahren nach einem beliebigen der vorangegangenen Ansprüche, **dadurch gekennzeichnet, dass** man die Filme in der Form so positioniert, dass sie randseitig aneinander stoßen.

5. Verfahren nach einem beliebigen der vorangegangenen Ansprüche, **dadurch gekennzeichnet, dass** das Kunststoffteil ein Teilstück einer Karosserie eines Kraftfahrzeugs oder eines Innenteils ist, das für einen Fahrgastraum eines Kraftfahrzeuges bestimmt ist.

6. Verfahren nach Anspruch 5, **dadurch gekennzeichnet, dass** das Kunststoffteil ein Teilbereich des Kühlergrills eines Kraftfahrzeugs ist.
